# EUROPEAN PATENT APPLICATION

(11) **EP 1 666 224 A1**
(43) Date of publication of application: **07.06.2006**
(21) Application number: 05077003.1
(22) Date of filing: 01.09.2005
(51) Int. Cl.: B29C 33/36, B29C 33/30

(54) **Device for manufacturing latex mattresses**

(30) Priority: 21.10.2004 NL 1027310
(71) Applicant: Artilat Naamloze Vennootschap, 2560 Nijlen (BE)
(72) Inventor: Groenweghe, Ronald Jose, 8510 Marke (BE)
(74) Representative: Valkonet, Rutger

(57) **Abstract**

The invention relates to a device (1) for manufacturing latex mattresses, comprising a conveying system (2) for mattress moulds (3), wherein each mattress mould (3) is made up of an upper (14b) and a lower (14a) mould section, which are pivotally interconnected, and wherein the latex-filled mattress moulds (3) can be subjected to one or more mattress-forming processing steps while being moved through the conveying system (2).

According to the invention, the device (1) is provided with means (30) for removing a latex mattress from a mattress mould (3). This obviates the need for operators to carry out manual operations, which on the one hand leads to improved ergonomic conditions but also to a reduced number of rejects and less damage to the mattresses.

## Description

The invention relates to a device for manufacturing latex mattresses, comprising a conveying system for mattress moulds, wherein each mattress mould is made up of an upper and a lower mould section, which are pivotally interconnected, and wherein the latex-filled mattress moulds can be subjected to one or more mattress-forming processing steps while being moved through the conveying system.

With a device as referred to in the introduction, latex mattresses are formed in mattress moulds in a continuous process. Said mattress moulds are arranged one behind another, forming a "train", in a conveying system, which system comprises a closed, circulating conveyor, for example, on which the mattress moulds are placed. During their movement over the conveyor, the mattress moulds are subjected to various mattress-forming processing steps, such as 1) filling the mattress mould with a predetermined amount of liquid latex, 2) vulcanising, 3) emptying the mattress mould at the end of the conveying path, i.e. removing the newly formed latex mattress from the mattress mould in order to carry out further processing steps, such as drying the mattress, etc, and 4) conditioning the emptied mattress mould so as to form a new latex mattress.

At present the removal of a newly formed mattress from the mattress mould still takes place manually. At the end of the conveying path each mattress mould is opened (which may or may not take place in an automated manner) by causing the lower and the upper mould section to pivot away from each other. The newly formed latex mattress which has thus been made accessible must be manually removed from the lower mould section or the upper mould section.

The operating conditions under which the manual removal of a newly formed latex mattress from a mattress mould takes place are less than optimal. Usually the newly formed latex mattress that is to be removed from the mould still has a fairly high temperature (on account of the manufacturing process), making it necessary for operators to wear protective clothing. Furthermore, the manual removal of the latex mattresses leads to unnecessary damage to the mattresses and consequently to a relatively high percentage of rejects. In addition to that, the manual operations are not very ergonomic, leading to injury and absence through illness of operators.

The object of the invention is to overcome the aforesaid drawbacks, and according to the invention the device is provided with means for removing a latex mattress from a mattress mould. This obviates the need for operators to carry out manual operations, which on the one hand leads to improved ergonomic conditions but also to a reduced number of rejects and less damage to the mattresses.

In a first embodiment, the removing means comprise at least one deforming element that can be placed into contact with the latex mattress, said removing means comprising first clamping means made up of at least a first and a second clamping element, which clamping elements are movable relative to each other, wherein either one of the first or the second clamping element can be moved between a circumferential edge of the lower or the upper mould section and the latex mattress that has been moved away from said circumferential edge by the deforming element.

The latex mattress to be removed is first deformed by the deforming element in such a manner that the long side of the mattress is moved clear of the circumferential edge of the (lower or upper) mould section that contains the mattress. By inserting a clamping element, which mates with the other clamping element, into the space between the circumferential edge and the mattress that has thus been created it becomes possible to clamp down the latex mattress and automatically - i.e. without any manual operations being required- remove it from the mould section. Since the removing means are placed into contact with the mattress in a controlled manner, the risk of damage and rejects is minimal.

An improved method of removing the latex mattress, which leads to an even further reduction of damage and rejects, is achieved in that in another embodiment the removing means further comprise second clamping means made up at least of a third clamping element that is movable with respect to the deforming element.

More specifically, at least the deforming element, the first clamping element, the second clamping element and/or the third clamping element extend along substantially the entire length of the latex mattress, making it possible to realise an improved clamping down and thus prevent damage.

A compact construction which is easy to control can be realised if, in a specific embodiment, the removing means are mounted on a yoke which is movable with respect to the conveying system.

In the first embodiment, the yoke is mounted on a drivable arm of, for example, a robot. This enables a more flexible operation of the device according to the invention, wherein the newly formed mattress can be removed either from the lower mould section or from the upper mould section.

In another embodiment, the yoke is movably arranged between two slightly spaced-apart parallel guides. The yoke is movably (in vertical direction) connected to a flexible connecting element that is wound on a rotary winding element.

More specifically, the rotary winding element is mounted on a support that can be moved over said two guides.

The invention also relates to removing means as described herein.

The invention will now be explained in more detail with reference to a drawing, in which:
Figure 1 is a schematic view of a device according to the prior art;
Figure 2a is a schematic view of an embodiment of the removing means according to the invention in a first operating condition thereof;
Figure 2b is a schematic view of the embodiment of the removing means of Figure 2a in a second operating condition thereof;
Figure 3 shows a first embodiment of a device according to the invention;
Figure 4 shows a second embodiment of a device according to the invention.

For a better understanding of the invention, like parts will be indicated by the same reference numerals in the detailed description of the figures below.

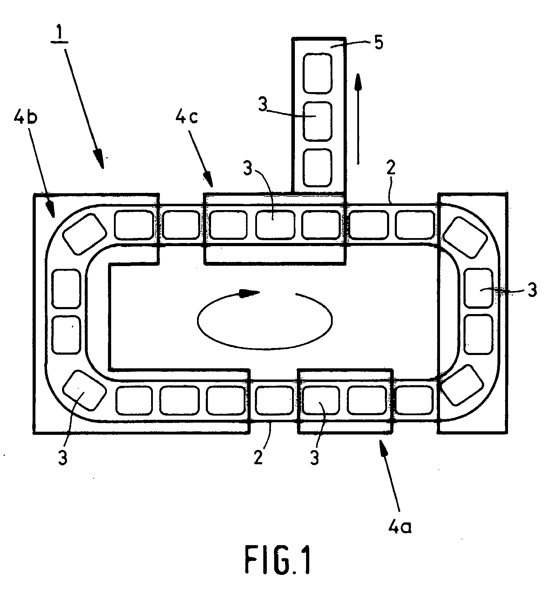

Figure 1 schematically shows an embodiment according to the prior art, in which latex mattresses are made. The device 1 is built up of a conveying system 2, preferably a circulating conveying system. A number of mattress moulds 3 are transported over said circular conveying system 2 in succession, and a mattress is formed in each of the mattress moulds 3. While the mattress moulds 3 are being moved over the conveying system 2, the amount of latex contained in the mattress moulds 3 is subjected to a number of mattress-forming operations.

In Figure 1 a number of such mattress-forming operations, indicated 4a-4d, are shown merely to illustrate and explain the system, which is known per se.

Numeral 4a indicates a filling station, from which each passing mattress mould 3 is filled with a predetermined amount of liquid latex. Numeral 4b indicates a heating or vulcanisation line, in which the amount of latex contained in each of the mattress moulds 3 is vulcanised so as to form the mattress.

Numeral 4c indicates the location in the conveying system 2 where the latex mattresses that have been formed in each of the mattress moulds 3 are removed therefrom and carried to a discharge station 5. Said discharge station is partially built up of a conveyor belt, on which each of the removed, newly formed mattresses is carried off for further processing.

Subsequently, each mattress mould 3 from which the latex mattress has been removed is conditioned (prepared) at the location indicated by reference numeral 4c before being filled with an amount of liquid latex at the filling station 4a, after which the entire manufacturing cycle is repeated.

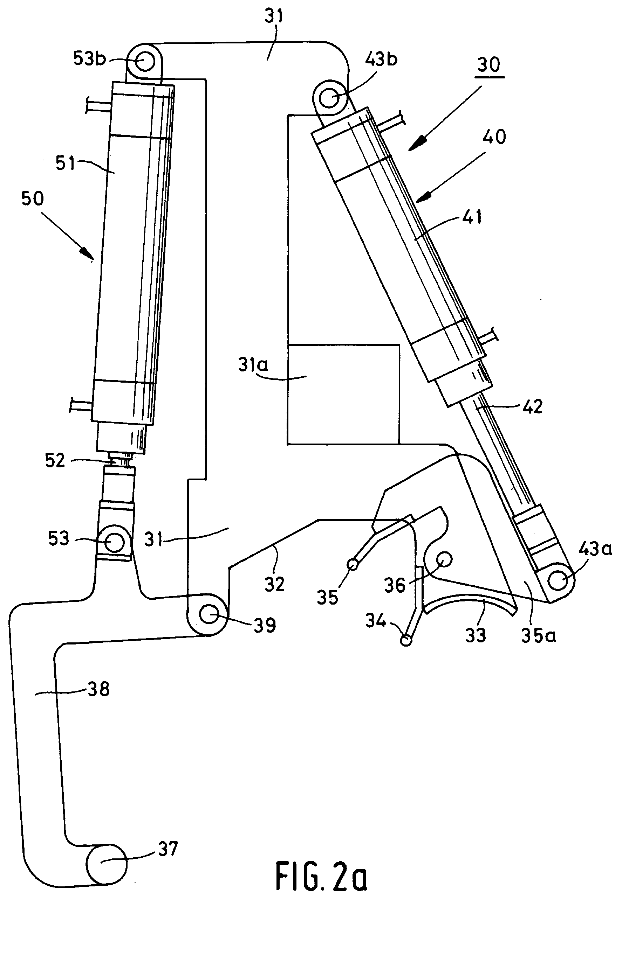

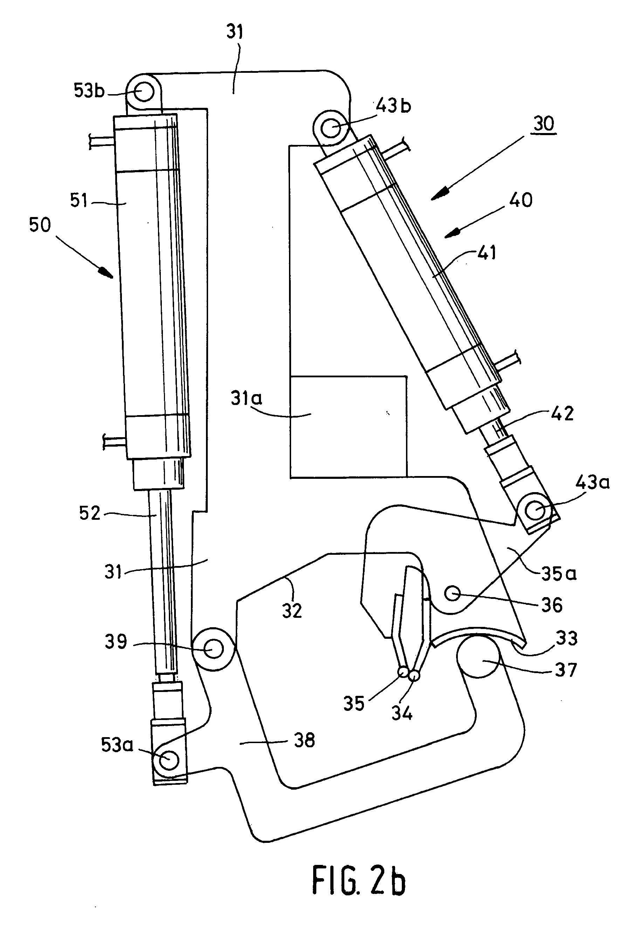

Figure 2 is a detailed view of the discharge station 5, i.e. the location in the conveying system 2 where the newly formed mattresses are removed from each of the mattress moulds. As Figure 2 shows, the conveying system 2 is built up of two drivable guideways 10a-10b, over which the mattress mould 3 can be moved. The mattress mould 3 is built up of two shell members 3a and 3b, which are interconnected by a hinge 13.

The shell members 3a, 3b comprise a lower mould section 14a and an upper mould section 14b, respectively, which fit together exactly when the shell members 3a and 3b are moved together, thus creating a moulding cavity 17 into which latex (not shown) can be introduced so as to form the latex mattress. The lower mould section 14a is provided with an upright edge 15, which may alternatively be present on the upper mould section 14b, however.

It should be noted that the manner in which the mattress mould 3 is filled with liquid latex is not relevant for a correct understanding of the invention. According to one manufacturing method, the mattress mould 3 is filled in open condition and the desired amount of liquid latex is introduced into the lower mould section 14a. The upright edge 15 prevents undesirable leakage of liquid latex. According to another manufacturing method, the mattress mould 3 is filled in closed condition and the correct amount of liquid latex is injected into the moulding cavity 17 enclosed by the two closed mould sections 14a-14b through an opening formed in the upper mould section 14b.

A number of upright pins 16a-16b are provided in each of the lower and upper mould sections 14a-14b, which pins extend into the latex mattress during the forming process of the latex mattress. Said upright pins function to transfer heat more efficiently into the core of the mattress to enable an improved control of or assist in the mattress forming process.

At the end of the manufacturing process, the mattress mould 3 (which is closed at that stage) is conveyed in the direction of the removing station 4d (see Figure 1). The shell member 3b of the mattress mould 3 is pivoted upwards - in a manner which is not relevant for a correct understanding of the present invention - providing access to the two mould sections 14a-14b. The mattress (not shown) that has been formed in said mattress mould 3 may have come loose from both mould sections 14a-14b as a result of the preparatory application of a so-called releasing agent, and consequently it is contained, being more or less freely accessible, in either the lower mould section 14a or the upper mould section 14b.

At present, as already described above, the mattress that is present in the open mattress mould 3 is manually removed from the respective lower or upper mould section 14a-14b at the location of the removing station 4d.

According to the invention, the device comprises removing means that remove the newly formed mattress from the lower or the upper mould section. Said removing means are indicated at 30, and in this embodiment they are freely movable with respect to the mattress mould 3. In this embodiment, the removing means 30 are movable in horizontal and in vertical direction in the device 1. The removing means 30 are movable in vertical direction away from and towards the open mattress mould 3 by means of a flexible connecting element 24.

The connecting element 24 is connected to the removing means 30 with one end and passed over a pulley 23 towards a rotary winding element 22, which can be driven by a driving motor 22a. The flexible connecting element 24 is wound on the rotary winding element 22 in one or more windings, so that the removing means 30 can be moved in vertical direction by suitably winding or unwinding the connecting element on or from the winding element 22 by means of the driving motor 22a.

The winding element 22 as well as the driving motor 22a are mounted in a supporting construction 20, which can be moved in horizontal direction over two slightly spaced-apart, parallel guides 21a-21b. Said movement over the guides 21a-21b can be effected by means of suitable guide wheels 25a-25b, for example.

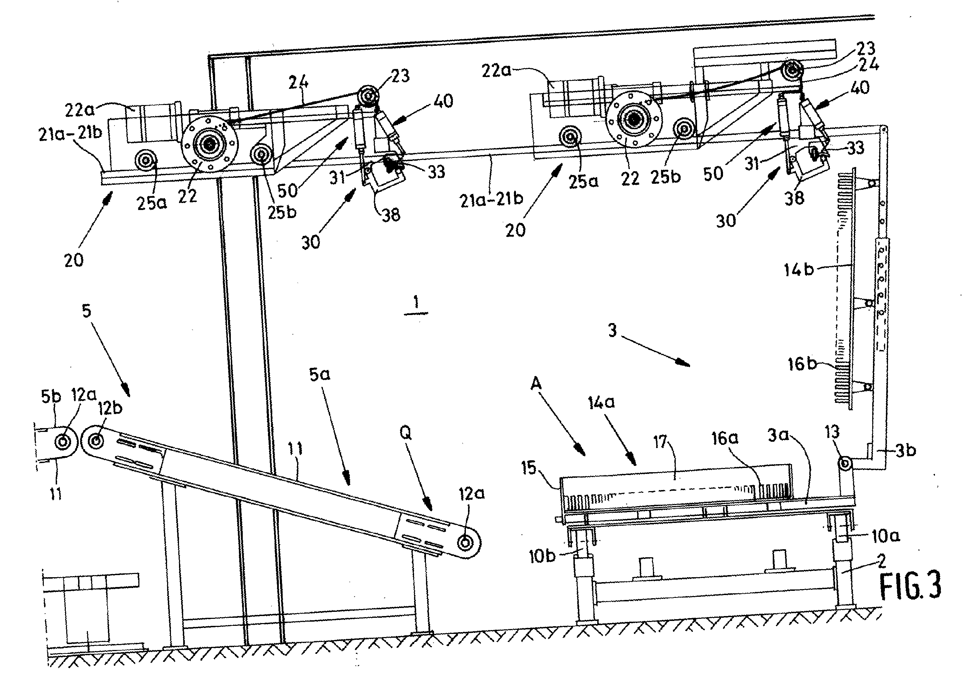

The operation of the removing means according to the invention will now be explained by means of an embodiment as shown in Figures 3A and 3B.

As is shown in Figure 3A, the removing means 30 comprise a deforming element 33, which is placed on the newly formed latex mattress, directly along a long side of the mattress and the upright edge 15 of the lower or upper mould section. The position at which the deforming element 33 is placed on the latex mattress to be removed (which is present in the moulding cavity 17) is indicated at A in Figure 2. The deforming element 33 extends along the entire length of the mattress to be removed, parallel to the upright edge 15.

The deforming element 33 forms part of a yoke 31, which is coupled to the flexible connecting element 24 for realising the vertical movement with respect to the mattress that is to be removed. The yoke 31 has a considerable weight, which can be further increased by means of an auxiliary weight 31 a. As a result of the force of gravity and the considerable weight of the yoke 31 (and the auxiliary weight 31 a), the deforming element 33 is moved down some distance into the supple, flexible latex mattress. As a result, the circumferential edge of the latex mattress, which abuts directly against the circumferential edge 15, will be moved clear of the circumferential edge at that location.

The removing means 30 are furthermore provided with first clamping means made up of first and second clamping elements 34-35, which are movable relative to each other. In the embodiment as shown in Figures 3A and 3B, the first clamping element 34 is fixedly connected to the yoke 31 at the location of the deforming element 33. Upon deformation of the latex mattress to be removed by the deforming element 33, the first clamping element 34, too, will move down into the supple, flexible mattress material.

The second clamping element 35 is pivotally connected to the yoke 31 via pivot point 36. The second clamping element 35 is provided with a flange 35a, which is pivotally connected, via pivot point 43a, to a spindle shaft 42 that forms part of first moving means 40. The spindle 42 is slidably accommodated in an extension cylinder 41. The extension cylinder 41 is in turn connected to the upper side of the yoke 31 via pivot point 43b.

The long side of the latex mattress, which has been moved clear of the circumferential edge 15 by the deforming element 33, can be clamped down by the first clamping means 34-35 by suitably driving the first moving means 40, so that the second clamping element 35 will pivot about the pivot point 36 in the direction of the first clamping element 34, as is shown in Figure 3B.

Now that the long side of the latex mattress, which has been moved clear of the circumferential edge 15 of the mattress mould 17, is clamped down between the first and the second clamping element 34-35, the mattress can be taken or pulled out of the lower mould section 14a by moving the removing means 30 in upward direction (by winding the flexible connecting element 24 on the winding element 22).

To prevent the mattress being damaged or torn on account of its weight at the long side that is clamped down between the first and the second clamping element 34-35, the removing means 30 are provided with second clamping means made up of a third clamping element 38, which can be moved with respect to the deforming element 33 by second moving means 50. Said third clamping element 38 is pivotally connected to the yoke 31 via pivot point 39, and furthermore to the extension spindle 52 via point 53a. The spindle 52 is movably accommodated in the extension cylinder 51, which is connected to the yoke 31 at point 53b. The third clamping element 38 has a clamping point 37, which, when actuated, can be moved towards the deforming element 33, as is shown in Figure 3B.

The mattress, which may or may not have been partially removed from the mould section 14a, can be fully clamped down by means of the third clamping element 38, thus preventing damaging or tearing of the mattress.

To obtain a good clamping action, in order to prevent the mattress from being damaged upon removal and movement thereof, both the deforming element 33 and the first, second and third clamping elements 34-35-38 (including the clamping point 37) extend along the full length of the mattress to be removed. As a result, a satisfactory clamping down of the mattress with a good pressure distribution is obtained. The occurrence of pressure points, which will inevitably lead to damage to the mattress to be removed, is prevented in this manner.

Furthermore, the yoke 31 is provided with a bearing edge 32, which will be supported on the upper edge of a circumferential edge 15 of the mould section 14a. In this way a proper orientation of the deforming elements 33 and of the first, second and third clamping elements 34-35-38 with respect to the mattress to be removed is obtained.

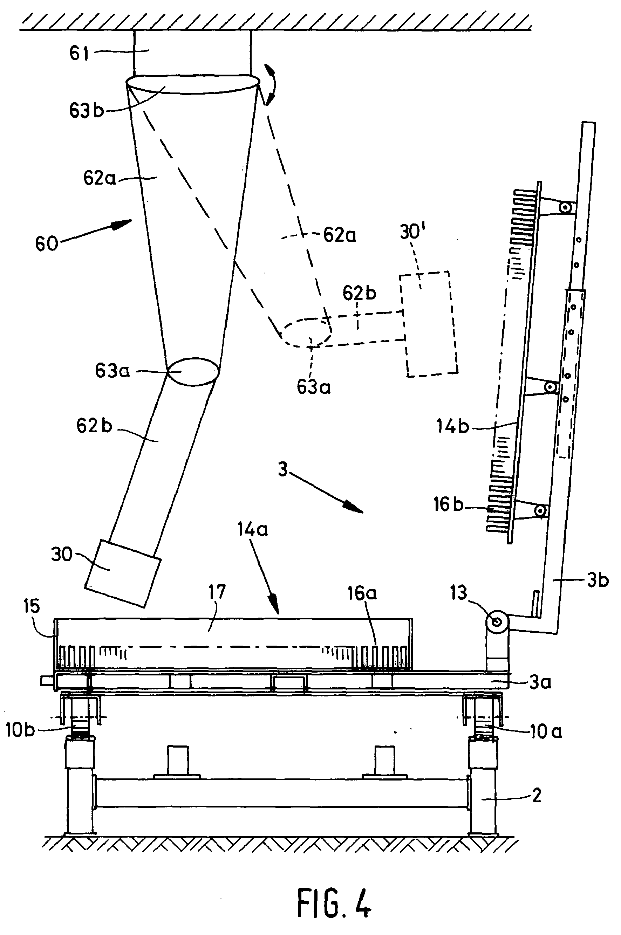

Figure 4 schematically shows another embodiment of the device according to the invention. In this embodiment, the removing means 30, which are schematically shown in Figure 4, are mounted on a drivable arm 60, which forms part of a driving unit 61. The arm 60 is an articulated arm made up of, for example, two arm sections 62a-62b, which are connected to the driving unit 61 by means of flexible couplings or hinges 63a-63b. The driving unit 61 is mounted on a support that extends above the conveying system 2. Both mattresses that are present in the lower mould section 14a and mattresses that are present in the upper mould section 14b can be removed by the removing means, using the robot arm 60, and be discharged in the direction of the discharge station 5 (Figure 2) in a simple manner.

Once the mattress has been fully removed from the mould section 14a by the removing means 30, the mattress is vertically suspended between the third clamping element 38 and the deforming element 33. By moving the supporting construction 22 back in the direction of the discharge station 5 (see Figure 2) over the guides 21a-21b by suitable driving means (not shown), the clamped-down mattress is positioned above a conveyor belt 5a, which conveyor belt is configured as an endless carrier 11 that moves on drivable rollers 12a-12b.

The mattress is placed on the conveyor belt 11 at the location indicated at Q by moving the yoke 31 down via the flexible connecting element 24 (a cable, for example) by means of the winding element 22. By subsequently moving the third clamping element back to the position that is shown in Figure 3A, the mattress is released and can be further discharged, for example to a drying device, for further processing via the conveyor belt section 5a and the next conveyor belt section 5b.

## Claims

1. A device for manufacturing latex mattresses, comprising
a conveying system for mattress moulds, wherein
each mattress mould is made up of an upper and a lower mould section, which are pivotally interconnected, and wherein
the latex-filled mattress moulds can be subjected to one or more mattress-forming processing steps while being moved through the conveying system, **characterized in that** the device is provided with means for removing a latex mattress from a mattress mould.

2. A device according to claim 1, **characterized in that** the removing means comprise at least one deforming element that can be placed into contact with the latex mattress.

3. A device according to claim 2, **characterized in that** the removing means comprising first clamping means made up of at least a first and a second clamping element, which clamping elements are movable relative to each other, wherein either one of the first or the second clamping element can be moved between a circumferential edge of the lower or the upper mould section and the latex mattress that has been moved away from said circumferential edge by the deforming element.

4. A device according to claim 2 or 3, **characterized in that** the removing means comprise second clamping means made up at least of a third clamping element that is movable with respect to the deforming element.

5. A device according to any one or more of the claims 2-4, **characterized in that** at least the deforming element, the first clamping element, the second clamping element and/or the third clamping element extend along substantially the entire length of the latex mattress.

6. A device according to any one or more of the preceding claims, **characterized in that** the removing means are mounted on a yoke which is movable with respect to the conveying system.

7. A device according to claim 6, **characterized in that** the yoke is mounted on a drivable arm.

8. A device according to claim 6, **characterized in that** the yoke is movably arranged between two slightly spaced-apart parallel guides.

9. A device according to claim 8, **characterized in that** the yoke is movably (in vertical direction) connected to a flexible connecting element that is wound on a rotary winding element.

10. A device according to claim 8 or 9, **characterized in that** the rotary winding element is mounted on a support that can be moved over said two guides.

11. Removing means as defined in to any one or more of the preceding claims.
